# EUROPEAN PATENT SPECIFICATION

(11) **EP 2 546 916 B1**
(45) Date of publication and mention of the grant of the patent: **27.09.2017**
(21) Application number: 11753319.0
(22) Date of filing: 07.03.2011
(51) Int. Cl.: H01M 2/26, H01M 10/052, H01M 10/0587

(54) **BATTERY**
BATTERIE
BATTERIE

(30) Priority: 12.03.2010 JP 2010055361
(43) Date of publication of application: 16.01.2013
(73) Proprietor: GS Yuasa International Ltd., Kisshoin, Minami-ku, Kyoto-shi, Kyoto 601-8520 (JP)
(72) Inventor: MIYAZAKI, Akihiko, Kyoto-shi Kyoto 601-8520 (JP)
(74) Representative: Becker Kurig Straus
(86) International application number: PCT/JP2011/055262
(87) International publication number: WO 2011/111661

(56) References cited:
- EP-A1- 1 213 783
- WO-A1-2009/025199
- JP-A- 10 021 952
- JP-A- 2003 297 413
- JP-A- 2004 022 339
- JP-A- 2005 190 697
- JP-A- 2010 055 887
- US-A1- 2003 186 113
- US-A1- 2006 024 578
- US-A1- 2008 076 019

## Description

### TECHNICAL FIELD

The present invention relates to a battery and particularly to a battery including a winding-type power generating element formed by winding band-shaped electrode sheets.

### BACKGROUND TECHNIQUE

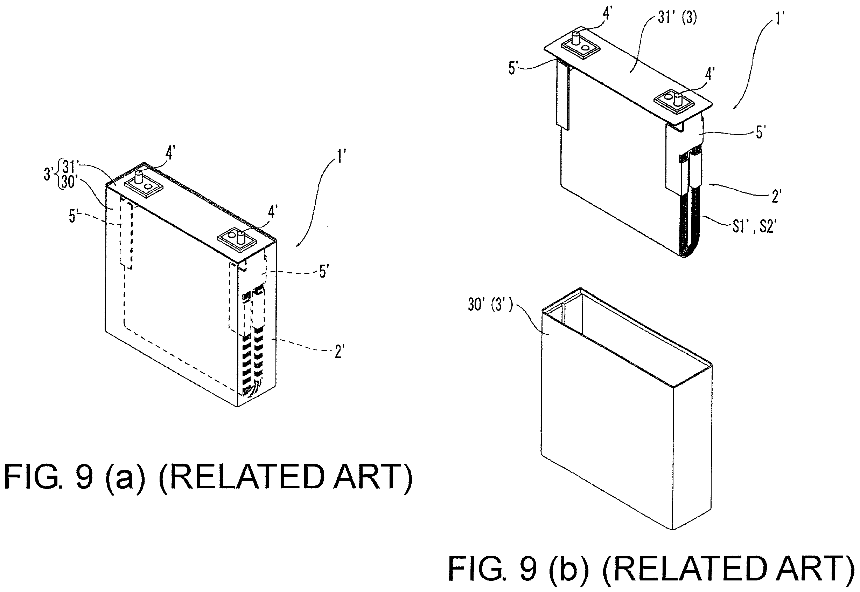

Conventionally, various types of batteries have been provided and one of them is a battery which includes a winding-type power generating element 2' formed by winding band-shaped electrode sheets S1' and S2' and a battery outer covering 3' for housing the power generating element 2' and in which the battery outer covering 3' is formed by a box-shaped outer covering main body 30' having an open face and a lid body 31' for closing the open portion of the outer covering main body 30' as shown in FIGS. 9(a) and 9(b).

In this type of battery 1', the open portion of the outer covering main body 30' housing the power generating element 2' is closed with the lid body 31' and current collecting members 5' electrically connected to the power generating element 2' are fixed to the lid body 31' (battery outer covering 3') while disposed in the outer covering main body 30' (on an inner face side of the lid body 31') and are electrically connected to external terminals 4' protruding outside from the lid body 31' (battery outer covering 3').

In this way, this type of battery 1', in which the current collecting members 5' support the power generating element 2' in a fixed position in the battery outer covering 3', supplies electricity from the power generating element 2' to a connected object (such as a cable and a bus bar) connected to the external terminals 4' through the current collecting members 5' and the external terminals 4' (see Patent Documents 1, 2, and 3, for example).

### PRIOR ART DOCUMENTS

### PATENT DOCUMENTS

Patent Document 1: Japanese Patent No. 4134521
Patent Document 2: Japanese Patent No. 4096162
Patent Document 3: Japanese Patent No. 4204258

### SUMMARY OF THE INVENTION

### PROBLEMS TO BE SOLVED BY THE INVENTION

Because only the current collecting members 5' support the power generating element 2' in the battery 1' having the above-described structure, the power generating element 2' swings in the battery outer covering 3' (outer covering main body 30') when vibration or a shock is applied from outside. Therefore, in the battery 1' having the above-described structure, when the power generating element 2' swings, force of the shock or bending action is concentrated on the current collecting members 5' supporting the power generating element 2' to increase electrical resistance in some cases. Moreover, in this type of battery 1', inserted members (not numbered) such as rivets for connecting the current collecting members 5' and the external terminals 4' are inserted through the lid body 31' and pieces of packing are provided between the lid body 31' and the inserted members to thereby make an inside of the battery outer covering 3' airtight. If the force of the shock or the bending acts on the current collecting members 5' due to the swinging of the power generating element 2' as described above, gaps are formed between the inserted members connected to the current collecting members 5' and the lid body 31' and it is impossible to maintain the inside of the battery outer covering 3' in the airtight state in some cases. Therefore, safety of the battery 1' having the above-described structure may be reduced when the vibration or the shock is applied from outside.

In this present situation, in manufacturing the battery 1' having the above-described structure, the entire power generating element 2' may be press-fitted into the outer covering main body 30' to thereby restrict movement of the power generating element 2' to reduce a burden on the current collecting members 5' (a supporting burden of the power generating element 2'). However, if the battery 1' is a secondary battery, the power generating element 2' repeats expansion and contraction due to charge and discharge and therefore, it becomes impossible for the power generating element 2' to come in pressure contact with the inner faces of the battery outer covering 3' (outer covering main body 30') due to change in the entire volume of the power generating element 2', and the current collecting members 5' supports the power generating element 2'. Therefore, in this case, too, similarly to the prior-art case, the power generating element 2' swings in the outer covering main body 30' and force of a shock or bending action is concentrated on the current collecting members 5' when vibration or the shock is applied from outside and, as a result, electrical resistance may increase or airtightness of the battery outer covering 3' deteriorates to thereby reduce safety.

Therefore, with such circumstances in view, it is an object of the present invention to provide a battery in which force is not concentrated on current collecting members connected to a power generating element when vibration or a shock is applied from outside and increase in electrical resistance and deterioration of airtightness of an inside can be prevented.

US 2008/076019 A1 discloses a core structure for a square lithium secondary battery comprising a core, an electrode assembly, and two conductive fixing assemblies. The respective layers of the positive and negative lead areas are clamped together by the conductive pressing pieces. In addition, the respective layers of the positive and negative lead areas are pressed against and in electrical contact with one another directly.

EP 1213783 A1 discloses a battery including a metallic container delimiting a cavity containing an electrolyte and a composite strip formed by a first metallic sheet coated with a material forming the positive electrode, by a second metallic strip coated with a material forming the negative electrode and by porous insulating separators, said composite strip being wound onto a core located at the center of the cavity and said electrodes being connected by connecting means to external terminals. All or part of the central core is made of a material with a high heat transmission coefficient in heat contact with at least the metallic closing cap.

### APPROACH TO SOLVING THE PROBLEMS

The present invention is provided by appended claim 1. Beneficial embodiments are provided by the dependent claims. Accordingly, a battery according to the present invention includes: a winding-type power generating element formed by winding a band-shaped electrode sheet and a separator; a battery outer covering including a box-shaped outer covering main body, having an open portion, and a lid body, for closing the open portion, to house the power generating element; an external terminal disposed outside the battery outer covering; and a current collecting member disposed in the battery outer covering, fixed to the lid body, and electrically connected to the power generating element and the external terminal. The power generating element includes a winding core having rigidity at a winding center and at least one end of the winding core is supported on an inner wall face of the outer covering main body.

With the battery having the above-described structure, the power generating element has the winding core having the rigidity at the winding center and at least one end of the winding core is supported on the inner wall face of the outer covering main body. Therefore, the power generating element does not swing and is maintained in a fixed position when vibration or a shock is applied from outside and it is possible to prevent concentration of force (force of a shock) on and application of bending action to the current collecting member fixed to the lid body. Therefore, in the battery having the above-described structure, it is possible to prevent increase in electrical resistance and deterioration of airtightness of the battery outer covering.

As an aspect of the invention, preferably, the winding core includes fitting protruding portions protruding outward from respective opposite ends of the electrode sheet in a direction orthogonal to a longitudinal direction, the outer covering main body includes fitting recessed portions on two inner wall faces facing each other inside, and the fitting protruding portions at the opposite ends of the winding core are fitted into the fitting recessed portions.

With such a structure, by fitting of the winding core (fitting protruding portions) and the outer covering main body (fitting recessed portions) with each other, the winding core (power generating element) is supported and fixed in the battery outer covering. As a result, even if the shock or the vibration is applied from outside, the power generating element does not swing and is maintained in the fixed position and it is possible to prevent concentration of the force (force of the shock) on or application of the bending action to the current collecting member fixed to the lid body. Therefore, in the battery having the above-described structure, it is possible to prevent increase in the electrical resistance and deterioration of the airtightness of the battery outer covering.

As another aspect of the invention, the fitting recessed portions are formed in shapes of grooves extending from the open portion toward an inner side of the outer covering main body and the fitting protruding portions are formed along the fitting recessed portions. In this way, large parts of the fitting protruding portions are fitted into the fitting recessed portions and therefore the power generating element can be fixed reliably.

In this case, positioning portions for positioning the fitting protruding portions may be formed at end portions of the fitting recessed portions on the inner side of the outer covering main body and the power generating element may be disposed without contact with at least an inner bottom face of the outer covering main body. In this way, the power generating element (winding core) interferes with the positioning portions (the end portions of the fitting recessed portions) and it is possible to reliably prevent movement of the power generating element in the direction in which the fitting recessed portions extend. In this case, the fitting recessed portions preferably extend from the open portion of the outer covering main body to positions between the open portion and the inner bottom face.

As another aspect of the invention, the winding core may have such an axial length that outer faces of the fitting protruding portions come in pressure contact with inner faces of the fitting recessed portions or the winding core may have such an axial length that outer faces of the fitting protruding portions press inner faces of the fitting recessed portions. In this way, the winding core is supported while the opposite end portions of the winding core (the fitting protruding portions) push against the opposed inner wall faces of the outer covering main body and the power generating element can be reliably fixed to the outer covering main body. The fitting protruding portions may be in rectangular shapes when seen in a direction orthogonal to the winding center.

As yet another aspect of the invention, each of the fitting protruding portions may be tapered from a side of the electrode sheet toward a tip end side and the fitting recessed portions may be formed to correspond to shapes of the fitting protruding portions. In this case, the fitting protruding portions are preferably formed in triangular, semicircular, or trapezoidal shapes when seen in a direction orthogonal to the winding center. In this way, contact force acting between the outer faces of the fitting protruding portions and the inner faces of the fitting recessed portions acts in a direction intersecting the axis of the winding core and it is possible to reliably restrict movement of the power generating element in two directions, i.e., the axial direction of the winding core and the direction intersecting the axial direction.

As yet another aspect of the invention, preferably, the winding core includes a core main body having the fitting protruding portions at respective opposite end portions and a cover portion for covering a whole circumference of the core main body, the fitting protruding portions are exposed from the cover portion, the core main body is made of metal material having heat conductivity, and the cover portion has an electrical insulation property and elasticity and is made of synthetic resin or natural resin. In this way, with the electrical insulation property of the cover portion, it is possible to reliably prevent end portions which are the beginning of winding of the electrode sheet (the layered electrode sheets for a positive electrode and a negative electrode) from being short-circuited through the winding core.

Furthermore, with the elasticity of the cover portion, it is possible to maintain a proper winding state of the electrode sheet. In other words, when the electrode sheet is wound around the core member, winding force (fastening force) of the electrode sheet acts on the cover portion and the cover portion is elastically deformed. As a result, with resilience (force acting radially outward) of the cover portion, it is possible to maintain the proper winding state of the electrode sheet. Furthermore, the core main body is made of the metal material having excellent heat conductivity and therefore it is possible to transfer heat due to charge and discharge to the outer covering main body having a large surface area through the core main body to thereby exert excellent radiation performance.

The power generating element may be covered with a sheet having an electrical insulation property and have a resin film on an outer surface of the sheet.

As yet another aspect of the invention, the fitting recessed portions may be formed at parts of the inner wall faces of the outer covering main body and at least one of the fitting protruding portions provided to the winding core can protrude and recede in an axial direction of the winding core. In this case, the winding core preferably has, inside itself, a biasing means for biasing the fitting protruding portion outward.

As yet another aspect of the invention, the winding core may be fixed to the inner wall face of the outer covering main body by welding.

### EFFECTS OF THE INVENTION

According to the battery of the present invention, it is possible to exert excellent effects, i.e., force is not concentrated on the current collecting member connected to the power generating element when the vibration or the shock is applied from outside to thereby prevent increase in electrical resistance and deterioration of airtightness of the inside.

### BRIEF DESCRIPTION OF THE DRAWINGS

FIG. 1 is a general perspective view of a battery according to an embodiment of the present invention.
FIG. 2 is an exploded perspective view of a state in which a power generating element and a lid body of the battery according to the embodiment are detached from an outer covering main body.
FIG. 3 is a schematic exploded perspective view of the battery according to the embodiment.
FIG. 4 is a sectional view taken along line I-I in FIG. 1.
FIG. 5 is a sectional view taken along line II-II in FIG. 4.
FIG. 6 is a sectional view taken along line III-III in FIG. 4.

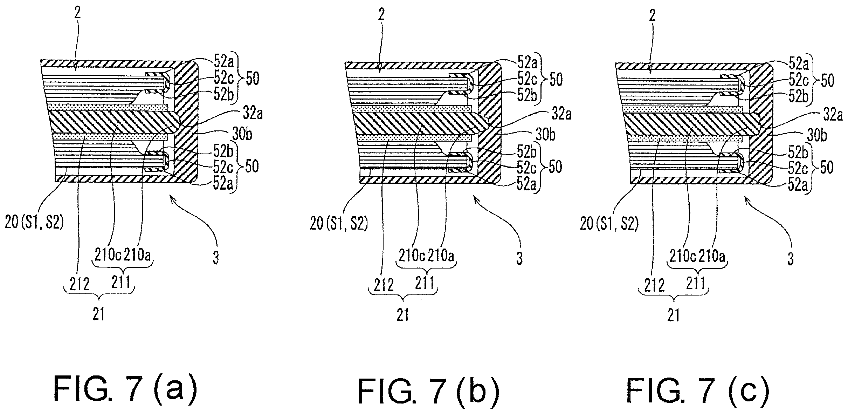

FIGS. 7(a) to 7(c) are partial cross-sectional views of the batteries according to other embodiments of the invention, wherein FIG. 7(a) is a partial cross-sectional view of a battery in which semicircular fitting protruding portion and fitting recessed portion are formed when seen in a vertical direction, FIG. 7(b) is a partial cross-sectional view of a battery in which trapezoidal fitting protruding portion and fitting recessed portion are formed when seen in the vertical direction, and FIG. 7(c) is a partial cross-sectional view of a battery in which rectangular fitting protruding portion and fitting recessed portion are formed when seen in the vertical direction.
FIG. 8 is an exploded perspective view of a battery according to another embodiment of the invention and showing a state in which a power generating element and a lid body are detached from an outer covering main body.
FIGS. 9(a) and 9(b) are explanatory drawings of a prior-art battery, wherein FIG. 9(a) is a general perspective view and FIG. 9(b) is an exploded perspective view of a state in which a power generating element and a lid body are detached from an outer covering main body.

### MODES FOR CARRYING OUT THE INVENTION

An embodiment of the present invention will be described below with reference to the accompanying drawings.

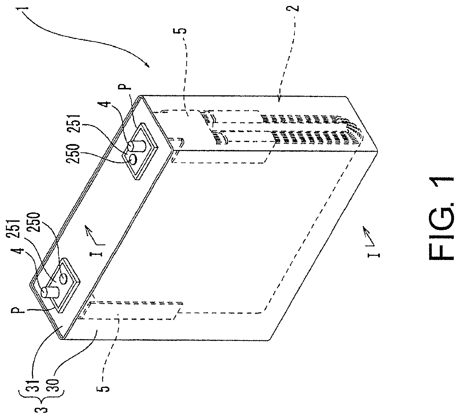

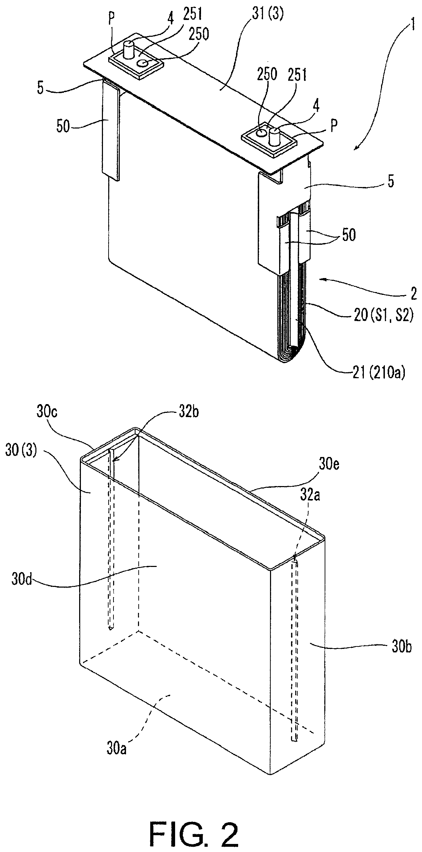

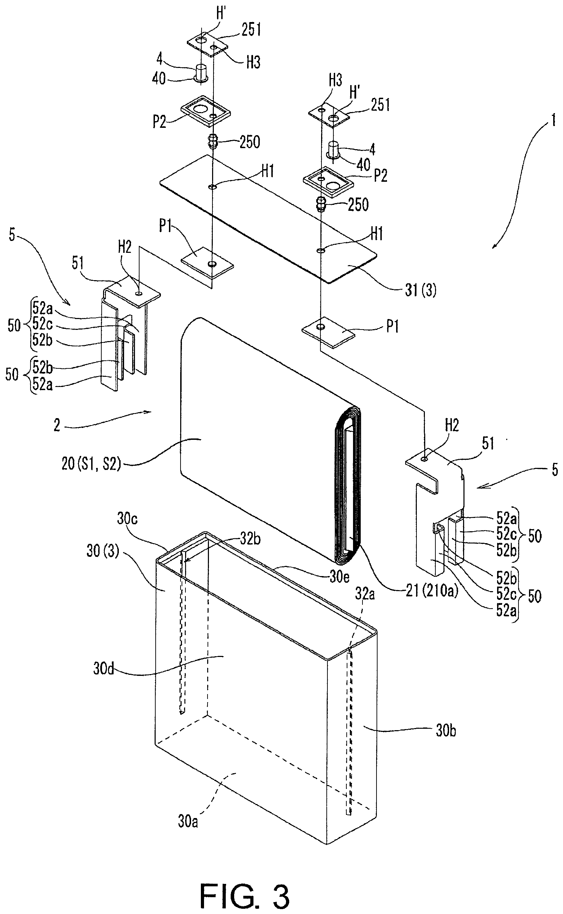

A battery according to the present embodiment is a lithium-ion battery which can be charged and discharged. In this battery, as shown in FIGS. 1 to 3, a power generating element 2 is housed in a battery outer covering 3 forming an outer shell of the battery 1 and the power generating element 2 is electrically connected to external terminals 4 provided outside the battery outer covering 3. To put it more concretely, as shown in FIGS. 2 and 3, the battery 1 according to the embodiment includes the winding-type power generating element 2 formed by winding band-shaped electrode sheets S1 and S2, the battery outer covering 3 for housing the power generating element 2, current collecting members 5 electrically connected to the power generating element 2 and disposed in the battery outer covering 3, and external terminals 4 electrically connected to the current collecting members 5 and disposed outside the battery outer covering 3.

The power generating element 2 is formed by winding a layered product (hereafter referred to as "electrode layered product") 20 obtained by layering the electrode sheet S1 for a positive electrode and the electrode sheet S2 for a negative electrode with a sheet-shaped separator (not numbered) interposed therebetween. The power generating element 2 according to the embodiment includes a winding core 21 which serves as a center of winding of the electrode sheets S1 and S2 and has rigidity. In other words, the power generating element 2 is formed by winding the band-shaped electrode layered product 20 around the winding core 21 having the rigidity. Here, "having the rigidity" means to have such strength that the winding core does not warp or hardly warps in the battery outer covering 3 and between a lid body 31 and a bottom of an outer covering main body 30 (described later) while the winding core is supported at one end (cantilever support) or at both ends (both-end support) and the winding core is preferably made of metal material such as aluminum and stainless steel.

Although it is not shown in the drawings, in the power generating element 2, the electrode sheet S1 for the positive electrode and the electrode sheet S2 for the negative electrode, both of which form the electrode layered product 20, are slightly displaced from each other in a direction orthogonal to a longitudinal direction (hereafter referred to as "short-side direction"), one end portion (one side end portion) of the electrode sheet S1 for the positive electrode in the short-side direction protrudes from an end edge of the electrode sheet S2 for the negative electrode in the short-side direction at one end side in the short-side direction (axial direction of the winding core 21) and the other end portion (the other side end portion) of the electrode sheet S2 for the negative electrode in the short-side direction protrudes from an end edge of the electrode sheet S1 for the positive electrode in the short-side direction on the other end side in the short-side direction (axial direction of the winding core 21) while the electrode sheets S1 and S2 are wound around the winding core 21.

The power generating element 2 according to the embodiment is formed by winding the electrode layered product 20 into a flat shape. Therefore, the winding core 21 which serves as the center of the power generating element 2 is formed in a plate shape.

The winding core 21 has an electrical insulation property at least at an outer periphery of an area around which the electrode layered product 20 (electrode sheets S1 and S2) is wound and opposite end portions of the winding core 21 are supported on two opposed inner wall faces in the battery outer covering 3 (outer covering main body 30 described later). In other words, the winding core 21 according to the embodiment is supported at both of its ends on the opposed inner wall faces of the battery outer covering 3 in the battery outer covering 3.

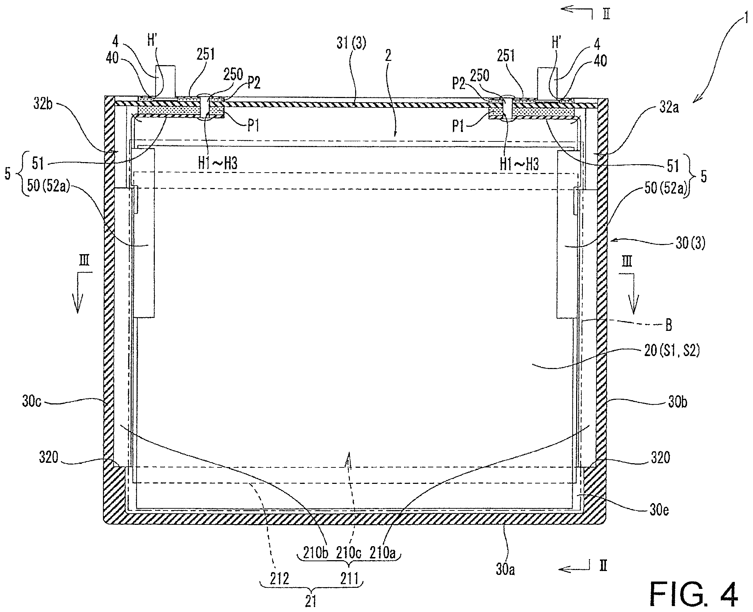

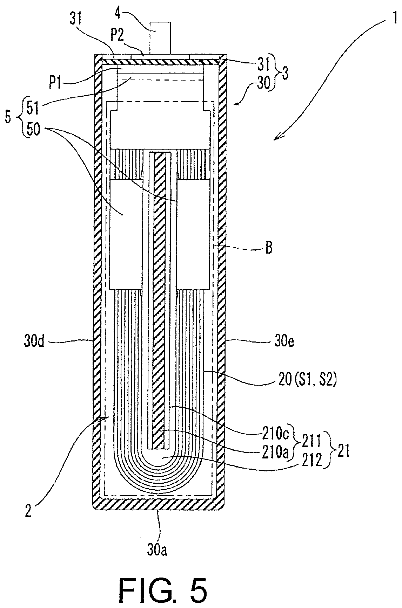

As shown in FIGS. 4 to 6, the winding core 21 according to the embodiment has, at its opposite ends, fitting protruding portions 210a and 210b protruding outward from opposite ends of the electrode sheets S1 and S2 (electrode layered product 20) in a direction orthogonal to the longitudinal direction and at least the outer periphery between the fitting protruding portions 210a and 210b has the electrical insulation property. In other words, the winding core 21 has one end portion extending further outward from the one end edge of the electrode sheet S1 for the positive electrode in the short-side direction and the other end portion extending further outward form the other end edge of the electrode sheet S2 for the negative electrode in the short-side direction and the outer periphery of the portion (between the fitting protruding portions 210a and 210b) of the winding core 21 surrounded with the electrode layered product 20 has the electrical insulation property.

To put it more concretely, the winding core 21 according to the embodiment includes a core main body 211 having the fitting protruding portions 210a and 210b at opposite end portions and a cover portion 212 for covering a whole outer periphery of the core main body 211 between the fitting protruding portions 210a and 210b.

The core main body 211 according to the embodiment is made of metal material excellent in heat conductivity. A whole length of the core main body 211 according to the embodiment from the one end to the other end in an axial direction corresponding to a winding center of the electrode layered product 20 is made of the same material (e.g., non-ferrous metal such as aluminum and copper).

Because the winding core 21 according to the embodiment is formed in the plate shape, the core main body 211 is also formed in a plate shape and the fitting protruding portions 210a and 210b are formed at the opposite end portions of the electrode layered product 20 in the direction (hereafter referred to as "width direction") corresponding to a winding center line of the electrode layered product 20. In other words, the core main body 211 includes a plate portion 210c in a rectangular shape in a plan view and the two fitting protruding portions 210a and 210b formed next to opposite end portions of the plate portion 210c.

The two fitting protruding portions 210a and 210b are formed along parts of the opposite end portions of the plate portion 210c in the width direction or whole lengths of the opposite ends of the plate portion 210c in the width direction. In the battery 1 according to the embodiment, the fitting protruding portions 210a and 210b are formed along the whole lengths of the end portions of the plate portion 210c. The fitting protruding portions 210a and 210b may be formed integrally with the plate portion 210c by being carved out of metal material or formed integrally with the plate portion 210c by being welded to the plate portion 210c (plate material). In the embodiment, the fitting protruding portions 210a and 210b are formed by being carved out of the metal material together with the plate portion 210c.

The core main body 211 having the above-described structure has opposite end faces in a direction (hereafter referred to as "vertical direction") orthogonal to the width direction and formed in shapes of flat faces or curved faces protruding outward. In the embodiment, the opposite end faces are formed in the shapes of curved faces protruding outward.

The winding core 21 has such a length in the width direction (axial direction) that outer faces of the fitting protruding portions 210a and 210b come in pressure contact with the inner faces of fitting recessed portions 32a and 32b (described later) while the fitting protruding portions 210a and 210b are fitted in the fitting recessed portions 32a and 32b. The fitting protruding portions 210a and 210b provided to the opposite end portions of the winding core 21 (core main body 211) in the width direction are tapered from sides of the electrode sheets S1 and S2 toward tip end sides. In other words, the respective fitting protruding portions 210a and 210b are formed so that their thicknesses in a direction (hereafter referred to as "thickness direction") orthogonal to the width direction and the vertical direction reduce from base end sides toward the tip end sides. As a result, the fitting protruding portions 210a and 210b according to the embodiment are in triangular shapes when seen in the vertical direction.

The cover portion 212 is made of synthetic resin or natural resin having electrical insulation property and elasticity. The cover portion 212 according to the embodiment is made of styrene-butadiene rubber (SBR). The cover portion 212 is formed to have a length corresponding to or longer than the electrode layered product 20 in the width direction based on the premise that the fitting protruding portions 210a and 210b made of metal material are exposed. Because the power generating element 2 according to the embodiment is formed by winding the electrode layered product 20 into the flat shape, outer surfaces of the opposite end portions of the cover portion 212 in the vertical direction are formed as arc-shaped faces protruding outward to correspond to curves of the electrode layered product 20 due to the winding. As a result, the electrode layered product 20 is in close contact with a whole circumference of the outer peripheral face of the winding core 21 (cover portion 212) on an innermost side. The power generating element 2 having the above-described structure is housed in the battery outer covering 3 while covered with a sheet B having an electrical insulation property. In the embodiment, a rubber sheet having elasticity is employed as the sheet B and the rubber sheet B sealing the power generating element 2 is brought into pressure contact with the inner wall faces of the battery outer covering 3. In other words, in the battery 1 according to the embodiment, the winding core 21 is caused to push against side walls 30b and 30c by fitting the fitting protruding portions 210a and 210b of the winding core 21 in the fitting recessed portions 32a and 32b in the outer covering main body 30 while a periphery of the sheet (rubber sheet) B sealing the power generating element 2 is brought into pressure contact with the inner wall faces of the battery outer covering 3 to thereby restrain the power generating element 2 from inside and outside.

If the power generating element 2 is covered with the rubber sheet B in this manner, the rubber sheet B covering the power generating element 2 is preferably further covered with a resin film (PP (polypropylene) film or the like) (not shown) and then press-fitted into the outer covering main body 30. In other words, in covering the power generating element 2 with the rubber sheet B and press-fitting it into the battery outer covering 3 (the outer covering 30 described later), if the rubber sheet B exists on the outer surface, friction is generated between the rubber sheet B and the inner wall faces of the battery outer covering 3 and it is difficult to press-fit the power generating element 2 into the battery outer covering 3. Therefore, by covering the rubber sheet B covering the power generating element 2 with the resin film (PP (polypropylene) film) or the like, it is possible to reduce the friction generated between the power generating element 2 (the resin sheet covering the power generating element 2) and the inner wall faces of the battery outer covering 3 and it is easy to press-fit the power generating element 2 into the battery outer covering 3.

The battery outer covering 3 is formed by the box-shaped outer covering main body 30 having an open face and the lid body 31 for closing the open portion of the outer covering main body 30. The outer covering main body 30 is formed by pressing or welding metal material. The outer covering main body 30 according to the embodiment is formed by press-forming non-ferrous metal and the same material as that of the winding core 21 (core main body 211) is employed as material of the outer covering main body 30.

The outer covering main body 30 has the fitting recessed portions 32a and 32b formed in the two inner wall faces facing each other inside. To put it more concretely, the outer covering main body 30 according to the embodiment includes a bottom portion 30a formed in a rectangular shape in a plan view, the two side walls 30b and 30c formed next to opposite ends of the bottom portion 30a in the longitudinal direction (direction corresponding to the width direction) and rising from the bottom portion 30a, and two front and back walls 30d and 30e formed next to opposite ends of the bottom portion 30a in the direction (the thickness direction) orthogonal to the longitudinal direction and rising from the bottom portion 30a and adjacent end edges of the side walls 30b and 30c and the front and back walls 30d and 30e are connected to each other.

In this way, the outer covering main body 30 is formed into a shape of a rectangular cylinder which has the one open face and the bottom. In the respective inner faces (inner wall faces) of the two side walls 30b and 30c of the outer covering main body 30 according to the invention, the fitting recessed portions 32a and 32b are formed to face each other. The fitting recessed portions 32a and 32b according to the embodiment are formed to extend from the open portion of the outer covering main body 30 to the inner side. In other words, the respective fitting recessed portions 32a and 32b are formed in shapes of grooves extending in the vertical direction.

In the fitting recessed portions 32a and 32b, the fitting protruding portions 210a and 210b of the winding core 21 are to be fitted. The fitting recessed portions 32a and 32b are formed in the shapes corresponding to the shapes of the fitting protruding portions 210a and 210b. Because the respective fitting protruding portions 210a and 210b provided at the opposite end portions of the winding core 21 are formed in the triangular shapes when seen in the vertical direction in the battery 1 according to the embodiment, the respective fitting recessed portions 32a and 32b are also formed in triangular shapes when seen in the vertical direction. As a result, outer faces of the fitting protruding portions 210a and 210b come in contact with inner faces of the fitting recessed portions 32a and 32b in the battery 1.

The winding core 21 of the battery 1 according to the embodiment has such an axial length that the outer faces of the fitting protruding portions 210a and 210b come in pressure contact with the inner faces of the fitting recessed portions 32a and 32b while the fitting protruding portions 210a and 210b are fitted in the fitting recessed portions 32a and 32b.

In other words, to press-fit the fitting protruding portions 210a and 210b into the fitting recessed portions 32a and 32b in the battery 1 according to the embodiment, a dimension (dimension of the winding core 21 (core main body 211) in the width direction) between apexes (ridges) of the fitting protruding portions 210a and 210b at opposite ends is the same as or slightly longer than a dimension between junctions (apexes) of two faces forming the fitting recessed portions 32a and 32b in positions facing each other.

In this way, the battery 1 according to the embodiment is formed so that the outer faces of the fitting protruding portions 210a and 210b are in pressure contact with the inner faces of the fitting recessed portions 32a and 32b while the opposite end portions (fitting protruding portions 210a and 210b) of the winding core 21 of the power generating element 2 are fitted in the fitting recessed portions 32a and 32b in the outer covering main body 30. Needless to say, because the fitting recessed portions 32a and 32b are formed to extend straight from the open portion of the outer covering main body 30 toward the inner side, the respective fitting protruding portions 210a and 210b are fitted into the fitting recessed portions 32a and 32b from the open portion side of the outer covering main body 30 while the winding core 21 (core main body 211) of the power generating element 2 is in such an attitude that the plate portion 210c is along the fitting recessed portions 32a and 32b.

The lid body 31 is formed by a metal plate and an outer peripheral edge portion of the lid body 31 is welded to a peripheral wall of the outer covering main body 30 while the lid body 31 is disposed in the open portion of the outer covering main body 30. Therefore, the lid body 31 is made of the same material as the outer covering main body 30 from a viewpoint of welding to the outer covering main body 30.

In the lid body 31, through holes H1 through which the current collecting members 5 and the external terminals 4 are electrically connected and rivets 250 for fixing the current collecting members 5 to the lid body 31 are inserted are formed (see FIG. 2). The lid body 31 according to the embodiment is formed in a rectangular shape in a plan view so as to be long in the width direction (direction corresponding to the winding center line of the electrode layered product 20 of the power generating element 2) and the through holes H1 are formed on one end side and the other end side in the width direction.

Formed at end portions of the fitting recessed portions 32a and 32b on the inner side of the outer covering main body 30 are positioning portions 320 for positioning the fitting protruding portions 210a and 210b so that the power generating element 2 does not come in contact with the inner bottom face of the outer covering main body 30 while the fitting protruding portions 210a and 210b are fitted. The positioning portions 320 according to the embodiment are formed at the ends of the fitting recessed portions 32a and 32b (see FIG. 4). In other words, the fitting recessed portions 32a and 32b are formed to extend to midway positions of the inner wall faces in the vertical direction. The ends at the midway positions of the inner wall faces in the vertical direction interfere with the fitting protruding portions 210a and 210b to thereby function as the positioning portions 320 for carrying out positioning of the fitting protruding portions 210a and 210b.

The battery 1 according to the embodiment includes the current collecting members 5 for the positive electrode and the negative electrode and both of the current collecting members 5 are disposed in the battery outer covering 3 (on the inner face side of the lid body 31). To put it more concretely, each of the current collecting members 5 includes connection portions 50 electrically connected to the power generating element 2 and a coupling portion 51 formed next to the connection portions 50 and fixed to the lid body 31. Each of the current collecting members 5 may be formed by separately forming the connection portions 50 and the coupling portion 51 and coupling (e.g., welding) them to each other. In the current collecting member 5 according to the embodiment, however, the connection portions 50 and the coupling portion 51 are formed integrally. In other words, the current collecting member 5 according to the embodiment is formed by cutting a metal plate and carrying out predetermined bending.

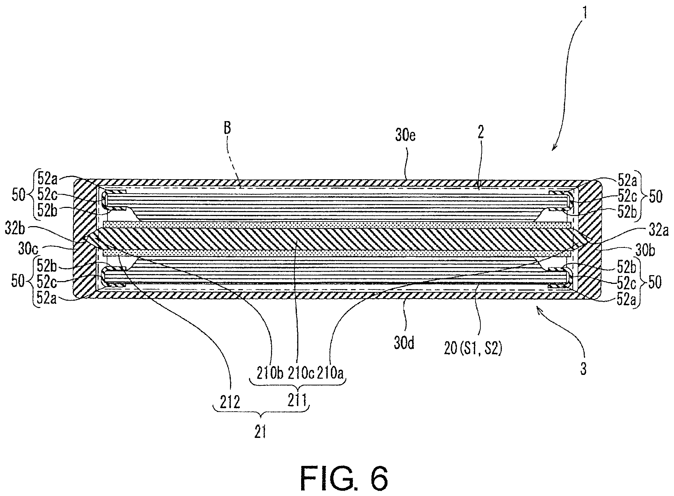

The connection portions 50 of the current collecting members 5 according to the embodiment are formed to pinch the electrode sheet S1 for the positive electrode or the electrode sheet S2 for the negative electrode of the power generating element 2. In other words, each of the connection portions 50 includes two pinching pieces 52a and 52b facing each other in the thickness direction and having one ends in the width direction and directly or indirectly connected to each other as shown in FIGS. 2 and 6. Each of the connection portions 50 is swaged or welded with the pair of pinching pieces 52a and 52b pinching the end portion, in the short-side direction, of the electrode sheet S1 or S2 forming the power generating element 2 (the portion protruding from the end edge of the electrode sheet S1 or S2 while the sheets S1 and S2 are displaced from each other) in bunch. Each of the connection portions 50 of the current collecting member 5 according to the embodiment is formed into an angular U shape when seen in the vertical direction. In other words, the one ends of the two pinching pieces 52a and 52b are connected by a band-plate-shaped portion 52c. Each of the connection portions 50 according to the embodiment is electrically connected to the power generating element 2 by disposing the end portion of the electrode sheet S1 or S2 between the pinching pieces 52a and 52b and narrowing a clearance between (swaging) the pinching pieces 52a and 52b.

The battery 1 according to the embodiment are provided with the two current collecting members 5 and each of the current collecting members 5 has two pairs of pinching pieces 52a and 52b as described above. In other words, because the power generating element 2 is formed by winding the electrode layered product 20 around the winding core 21, the power generating element 2 is divided into two areas in the thickness direction by the winding core 21. Therefore, in each of the current collecting members 5, the connection portions 50 independent of each other are respectively connected to the end portions of the electrode sheet S1 or S2 (the layered portions of the electrode sheet S1 or S2 having the same polarity) in the two areas.

The coupling portion 51 has one end to which the connection portions 50 are connected. Because each of the current collecting members 5 according to the embodiment has the two connection portions 50, the connection portions 50 join together and are connected to the coupling portion 51.

The coupling portion 51 is formed into a plate shape and has a through hole H2 corresponding to the through hole H in the lid body 31.

The battery 1 according to the embodiment includes connecting rods 251 formed by metal plates as shown in FIGS. 2 and 4. Each of the connecting rods 251 has a terminal insertion hole H' into which the external terminal 4 is to be mounted and a through hole H3 through which the rivet 250 is to be inserted.

The external terminal 4 is formed in a shaft shape. A large-diameter portion 40 having a larger diameter than the external terminal 4 is provided next to one end portion of the external terminal 4 according to the embodiment. The external terminal 4 is inserted through the terminal insertion hole H' in the connecting rod 251 from a side of the lid body 31 and protrudes outward while the large-diameter portion 40 is prevented from coming out.

In the battery 1 according to the embodiment, pieces of insulating packing P1 and P2 for electrical insulation are provided between the current collecting member 5 (coupling portion 51) and the lid body 31, between the connecting rod 251 and the lid body 31, and between the rivet 250 and the lid body 31. The battery 1 according to the embodiment includes the first insulating packing P1 for the electrical insulation between the current collecting member 5 (coupling portion 51) and the lid body 31 and between the rivet 250 and the lid body 31 and the second insulating packing P2 for the electrical insulation between the connecting rod 251 and the lid body 31.

The first insulating packing P1 and the second insulating packing P2 are disposed inside and outside the lid body 31 in such a manner as to sandwich the lid body 31. The first insulating packing P1 is provided between the current collecting member 5 (coupling portion 51) and the lid body 31 and therefore has a through hole (not numbered) through which the rivet 250 is to be inserted. The second insulating packing P2 is provided between the connecting rod 251 and the lid body 31 and therefore has a through hole (not numbered) through which the rivet 250 is to be inserted similarly to the first insulating packing P1 (see FIG. 2).

In the battery 1 according to the embodiment, by disposing the connecting rods 251 outside the battery outer covering 3 (on an outer face side of the lid body 31) and disposing the current collecting members 5 (coupling portions 51) inside the battery outer covering 3 (on an inner face side of the lid body 31) and then swaging opposite end portions of the rivets 250 respectively inserted through the connecting rods 251, the lid body 31, and the current collecting members 5 (coupling portions 51), the current collecting members 5 are fixed to the lid body 31 and the power generating element 2 and the external terminals 4 are electrically connected through the current collecting members 5 and the rivets 250. Because the first insulating packing P1 and the second insulating packing P2 are provided between the connecting rod 251, the lid body 31, and the current collecting member 5 (coupling portion 51) as described above, they are elastically deformed due to swaging of the rivet 250 as described above to thereby provide sealing between the respective structures (an airtight state of the inside of the battery outer covering 3) while electrically insulating the structures from each other.

The battery 1 according to the embodiment has the above structure and increase in resistance and occurrence of poor sealing of the battery outer covering 3 can be prevented, even when vibration or a shock is applied from outside. To put it concretely, as described above, in the battery 1 according to the embodiment, the power generating element 2 includes the winding core 21 which serves as the center of winding of the electrode sheets S1 and S2 and has rigidity, the winding core 21 has the fitting protruding portions 210a and 210b protruding outward from the opposite ends of the electrode sheets S1 and S2 in the direction orthogonal to the longitudinal direction and has the electrical insulation property at least at its outer periphery between the fitting protruding portions 210a and 210b, the fitting recessed portions 32a and 32b are formed in the two inner wall faces of the outer covering main body 30 and facing each other inside, the fitting protruding portions 210a and 210b are fitted into the fitting recessed portions 32a and 32b formed in the two inner wall faces, and the outer faces of the fitting protruding portions 210a and 210b are in or substantially in contact with the inner faces of the fitting recessed portions 32a and 32b. Therefore, even if the power generating element 2 (electrode sheets S1 and S2) repeats expansion and contraction as a result of charge and discharge, the fitting protruding portions 210a and 210b are kept fitted in the fitting recessed portions 32a and 32b.

As a result, even if the shock or the vibration is applied from outside, the power generating element 2 does not swing in the width direction and the thickness direction and is maintained in a fixed position and it is possible to prevent concentration of the force on or application of the bending action to the current collecting members 5 fixed to the lid body 31. Therefore, in the battery 1 having the above-described structure, it is possible to prevent increase in the electrical resistance and deterioration of airtightness of the battery outer covering 3' (between the first pieces of insulating packing P1 and the rivets 250 or between the pieces of insulating packing P1 and the lid body 31).

The winding core 21 of the battery 1 according to the embodiment has such an axial length that the outer faces of the fitting protruding portions 210a and 210b come into pressure contact with the inner faces of the fitting recessed portions 32a and 32b while the fitting protruding portions 210a and 210b are fitted in the fitting recessed portions 32a and 32b. Therefore, the winding core 21 is supported while the opposite end portions of the winding core 21 (the fitting protruding portions 210a and 210b) push against the opposed inner wall faces of the outer covering main body 30 and the power generating element 2 can be reliably (securely) fixed to the outer covering main body 30.

Especially, in the battery 1 according to the embodiment, the opposite fitting protruding portions 210a and 210b are tapered from the sides of the electrode sheets S1 and S2 toward tip ends and the fitting recessed portions 32a and 32b are formed to correspond to the shapes of the fitting protruding portions 210a and 210b and therefore contact force (pressure contact force) acting between the outer faces of the fitting protruding portions 210a and 210b and the inner faces of the fitting recessed portions 32a and 32b acts in a direction intersecting the axis of the winding core 21 and it is possible to reliably restrict movement of the power generating element 2 in the axial direction of the winding core 21 and the direction intersecting the axial direction.

In the embodiment, because the fitting recessed portions 32a and 32b are formed in the shapes of the grooves extending from the open portion of the outer covering main body 30 toward the inner side and the fitting protruding portions 210a and 210b are formed along the fitting recessed portions 32a and 32b and therefore large parts of the fitting protruding portions 210a and 210b are fitted into the fitting recessed portions 32a and 32b. In this way, in the battery 1 according to the embodiment, the opposite end portions of the winding core 21 are supported (fixed) and the power generating element 2 can be fixed reliably.

Because the positioning portions 320 for positioning the fitting protruding portions 210a and 210b so that the electrode sheets S1 and S2 forming the power generating element 2 do not come in contact with the inner bottom face of the outer covering main body 30 while the fitting protruding portions 210a and 210b are fitted in the fitting recessed portions 32a and 32b are formed at the end portions of the fitting recessed portions 32a and 32b on the inner side of the outer covering main body 30 and therefore the power generating element 2 (winding core 21) interferes with the end portions (positioning portions 320) of the fitting recessed portions 32a and 32b and it is possible to reliably prevent movement of the power generating element 2 in the direction (vertical direction) in which the fitting recessed portions 32a and 32b extend.

In the embodiment, the winding core 21 includes the core main body 211 having the fitting protruding portions 210a and 210b at the opposite end portions and includes the cover portion 212 covering the whole circumference of the core main body 211 between the fitting protruding portions 210a and 210b, the core main body 211 is made of metal material having excellent heat conductivity, and the cover portion 212 is made of synthetic resin (SBR) having electrical insulation property and elasticity. Therefore, with the electrical insulation property of the cover portion 212, it is possible to reliably prevent end portions which are the beginning of winding of the electrode layered product 20 (the layered electrode sheets S1 and S2 for the positive electrode and the negative electrode) from being short-circuited through the winding core 21.

Moreover, with the elasticity of the cover portion 212, it is possible to maintain a proper winding state of the electrode sheets S1 and S2. In other words, when the electrode sheets S1 and S2 are wound around the winding core 21, winding force (fastening force) of the electrode sheets S1 and S2 acts on the cover portion 212 and the cover portion 212 is elastically deformed. As a result, in the battery 1 according to the embodiment, with resilience (force acting radially outward) of the cover portion 212, it is possible to maintain the proper winding state of the electrode sheets S1 and S2. Furthermore, in the battery 1 according to the embodiment, the core main body 211 is made of the metal material having excellent heat conductivity and therefore it is possible to transfer heat due to charge and discharge to the outer covering main body 30 having a large surface area through the core main body 211 to thereby exert excellent radiation performance.

It is needless to say that the present invention is not limited to the above-described embodiment and can be changed properly without departing from the gist of the invention.

For example, although the lithium-ion battery has been described in the above-described embodiment, it is needless to say that the invention is not limited to it and may be a battery such as a nickel-metal hydride battery and a nickel-cadmium battery. In other words, it suffices if the current collecting members 5 and the external terminals 4 disposed inside and outside the lid body 31 are electrically connected and if the current collecting members 5 are fixed to the lid body 31.

Although the fitting recessed portions 32a and 32b extending from the open portion toward the inner portion of the outer covering main body 30 are formed in the opposed inner wall faces of the outer covering main body 30 and the fitting protruding portions 210a and 210b of the winding core 21 are formed in the forms along the fitting recessed portions 32a and 32b in the above-described embodiment, the invention is not limited to it. For example, the fitting recessed portions 32a and 32b extending from the open portion toward the bottom portion of the outer covering main body 30 may be formed and the fitting protruding portions 210a and 210b of the winding core 21 may be formed in forms shorter than the fitting recessed portions 32a and 32b in the vertical direction so that the fitting protruding portions 210a and 210b come in pressure contact with parts of the fitting recessed portions 32a and 32b. Alternatively, the fitting recessed portions 32a and 32b may be formed in parts of the outer covering main body 30 and the fitting protruding portions 210a and 210b of the winding core 21 may be formed so that they can be fitted into the fitting recessed portions 32a and 32b. In other words, the forms of the fitting recessed portions 32a and 32b and the fitting protruding portions 210a and 210b can be changed in various ways, if the outer faces of the fitting protruding portions 210a and 210b are in or substantially in contact with the inner faces of the fitting recessed portions 32a and 32b while the fitting protruding portions 210a and 210b are fitted in the fitting recessed portions 32a and 32b formed in the opposed inner wall faces of the outer covering main body 30.

Although the fitting recessed portions 32a and 32b extending from the open portion toward the inner portion of the outer covering main body 30 are formed in the opposed inner wall faces of the outer covering main body 30 and the fitting protruding portions 210a and 210b to be fitted into the fitting recessed portions 32a and 32b are formed at the opposite end portions of the core main body 211 made of the same material throughout the whole length from one end to the other end in the above-described embodiment, the invention is not limited to it. For example, the fitting recessed portions 32a and 32b may be formed at parts of the opposed inner wall faces of the outer covering main body 30 and at least one of the fitting protruding portions 210a and 210b provided to the opposite end portions of the winding core 21 may be formed to be movable in the axial direction so as to be able to protrude and recede in the battery outer covering 3 (outer covering main body 30). In this way, the fitting protruding portions 210a and 210b recede when the power generating element 2 is inserted into the outer covering main body 30 and the fitting protruding portions 210a and 210b protrude outward to be fitted into the fitting recessed portions 32a and 32b while the fitting protruding portions 210a and 210b come into positions corresponding to the partially-formed fitting recessed portions 32a and 32b. In this case, it is needless to say that biasing means for biasing the fitting protruding portions 210a and 210b outward are preferably provided in the core main body 211.

Although the fitting protruding portions 210a and 210b are formed in the triangular shapes when seen in the vertical direction so that the dimensions in the thickness direction reduce from the base end sides toward the tip end sides in the above-described embodiment, the invention is not limited to it. For example, the fitting protruding portions 210a and 210b may be formed in semicircular shapes when seen in the vertical direction and the fitting recessed portions 32a and 32b may be formed as semicircular grooves when seen in the vertical direction so as to correspond to the fitting protruding portions 210a and 210b as shown in FIG. 7(a) or the fitting protruding portions 210a and 210b may be formed in trapezoidal shapes when seen in the vertical direction and the fitting recessed portions 32a and 32b may be formed in triangular or trapezoidal shapes when seen from above as shown in FIG. 7(b).

The fitting protruding portions 210a and 210b are not limited to the ones having the dimensions in the thickness directions reducing from the base end sides toward the tip end sides. For example, the fitting protruding portions 210a and 210b may be formed in rectangular shapes when seen in the vertical direction and the fitting recessed portions 32a and 32b may be formed in shapes corresponding to the rectangular shapes as shown in FIG. 7(c).

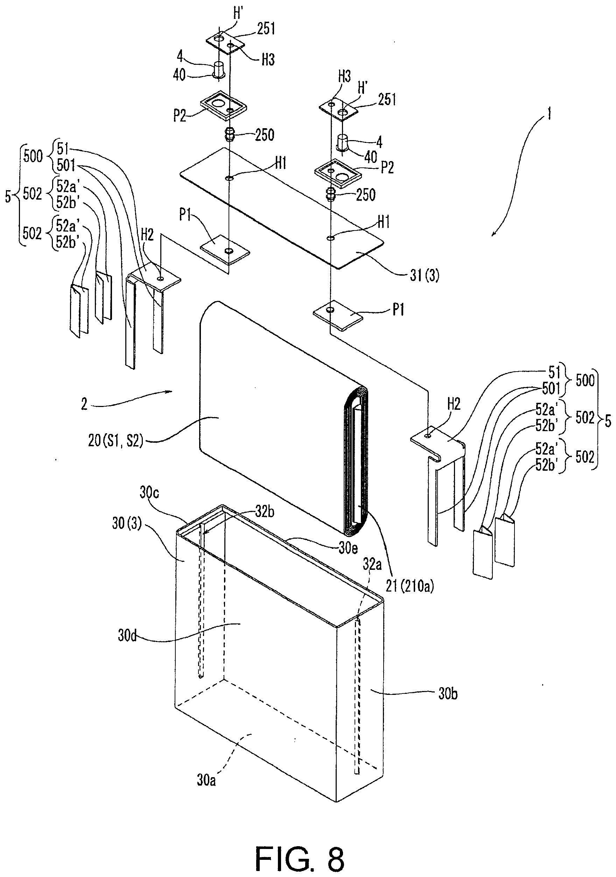

Although each of the connection portions 50 of the current collecting members 5 is formed by the pair of pinching pieces 52a and 52b and the band-plate-shaped portion 52c connecting the one ends of the two pinching pieces 52a and 52b and is electrically connected to the power generating element 2 by disposing the end portion of the electrode sheet S1 or S2 between the pinching pieces 52a and 52b and narrowing the clearance between (swaging) the two pinching pieces 52a and 52b in the above-described embodiment, the invention is not limited to it. For example, as shown in FIG. 8, the two pinching pieces 52a' and 52b' of the current collecting member 5 for pinching the end portion of the electrode sheet S1 or S2 may be formed as separate bodies.

To put it concretely, each of the current collecting members 5 may include, as a structure to be electrically connected to the power generating element 2 (the structure corresponding to the connection portions 50 in the above-described embodiment), strips 501 formed next to the coupling portion 51, and pinching members 502 for pinching end portions of the electrode sheet S1 or S2 of the power generating element 2 in cooperation with the strips 501. In other words, each of the current collecting members 5 may be formed by a current collecting member main body 500, having the strips 501 disposed along the end portions of the electrode sheet S1 or S2 forming the power generating element 2 and the coupling portion 51 next to which the strips 501 are formed and which is fixed to the lid body 31, and the pinching members 502 for pinching the end portions of the electrode sheet S1 or S2 in cooperation with the strips 501. Each of the pinching members 502 includes the two pinching pieces 52a' and 52b' one ends of which are connected to each other and which face each other. In other words, each of the pinching members 502 is formed by folding a metal plate or a metal sheet in two to thereby form the two pinching pieces 52a' and 52b' divided by a folding ridge. In this way, the current collecting member 5 of this type can conduct electricity from the power generating element 2 to the external terminal 4 as in the above-described embodiment by disposing the end portion of the electrode sheet S1 or S2 and the strip 501, arranged along the end portion of the electrode sheet S1 or S2, between the two pinching pieces 52a' and 52b' and narrowing a clearance between (swaging) the two pinching pieces 52a' and 52b' to thereby bring the strip 501 and the end portion of the electrode sheet S1 or S2 into pressure contact with each other.

Although the cover portion 212 of the winding core 21 is made of SBR in the above-described embodiment, it may be made of other synthetic resins or natural resins. In other words, if the winding core 21 is formed by the core main body 211 and the cover portion 212, the cover portion 212 may be made of material having elasticity and an electrical insulation property. Although the winding core 21 is formed by the core main body 211 and the cover portion 212 in the above-described embodiment, the invention is not limited to it and the whole winding core 21 may be molded of single material having an electrical insulation property. However, it is needless to say that the winding core 21 including the core main body 211 having the excellent heat conductivity as in the embodiment is preferably employed for radiation of heat of the power generating element 2.

Although the battery 1 having the single power generating element 2 has been described in the above-described embodiment, the invention is not limited to it. For example, the invention may be the battery 1 having two or more power generating elements 2. In this case, a winding core 21 having rigidity may be provided for each of the power generating elements 2 and fitting recessed portions 32a and 32b into which fitting protruding portions 210a and 210b of the winding cores 21 of the respective power generating elements 2 are to be fitted may be formed according to arrangements of the power generating elements 2 (winding cores 21).

Although the external terminals 4 are mounted to the connecting rods 251 and the external terminals 4 are connected to the power generating element 2 through the connecting rods 251, the rivets 250, and the current collecting members 5 in the above-described embodiment, the invention is not limited to it. For example, the external terminals 4 may be formed by rivet members and end portions of the rivet members and inside the outer covering main body 30 (inside the lid body 31) may be coupled to the coupling portions 51 of the current collecting members 5.

Although the winding core 21 is caused to push against the side walls 30b and 30c by fitting the fitting protruding portions 210a and 210b of the winding core 21 in the fitting recessed portions 32a and 32b in the outer covering main body 30 while the periphery of the sheet (rubber sheet) B sealing the power generating element 2 is brought into pressure contact with the inner wall faces of the battery outer covering 3 so that the power generating element 2 is restrained from inside and outside in the above-described embodiment, the invention is not limited to it. It is of course possible that the winding core 21 is just caused to push against the side walls 30b and 30c by fitting the fitting protruding portions 210a and 210b of the winding core 21 in the fitting recessed portions 32a and 32b in the outer covering main body 30. However, if the battery outer covering 3 is made of metal, the power generating element 2 may be housed in the battery outer covering 3 while wrapped with a resin sheet having an electrical insulation property in order to electrically insulate the power generating element 2 and the battery outer covering 3 from each other.

Although the winding core 21 has such an axial length that the outer faces of the fitting protruding portions 210a and 210b come in pressure contact with the inner faces of the fitting recessed portions 32a and 32b (the outer faces of the fitting protruding portions 210a and 210b apply pressing force to the inner faces of the fitting recessed portions 32a and 32b) while the fitting protruding portions 210a and 210b are fitted in the fitting recessed portions 32a and 32b in the above-described embodiment, the invention is not limited to it. The winding core 21 may have such an axial length that the outer faces of the fitting protruding portions 210a and 210b are in or substantially in contact with the inner faces of the fitting recessed portions 32a and 32b (the outer faces of the fitting protruding portions 210a and 210b come in contact with the inner faces of the fitting recessed portions 32a and 32b without applying the pressing force to the inner faces) while the fitting protruding portions 210a and 210b are fitted in the fitting recessed portions 32a and 32b.

Although the winding core 21 is supported (fixed) in the outer covering main body 30 (battery outer covering 3) by fitting the fitting protruding portions 210a and 210b into the fitting recessed portions 32a and 32b in the above-described embodiment, the invention is not limited to it. For example, the winding core 21 may be supported (fixed) in the outer covering main body 30 by forming protruding portions on the inner wall faces of the outer covering main body 30, forming recessed portions in the end portions of the winding core 21, and fitting the protruding portions of the outer covering main body 30 into the recessed portions. The winding core 21 is not necessarily supported in the outer covering main body 30 by fitting of the recessed and protruding portions with each other. For example, the opposite end portions of the winding core 21 may be supported (fixed) onto the inner wall faces of the outer covering main body 30 by welding or the like. In this way, too, the power generating element 2 can be prevented from swinging in the battery outer covering 3 and the increase in the electrical resistance and deterioration of the airtightness of the inside can be prevented. Although the opposite end portions of the winding core 21 are supported in the outer covering main body 30 in the above-described embodiment, the opposite end portions of the winding core 21 are not necessarily supported when the winding core 21 is supported (fixed) onto the inner wall faces of the outer covering main body 30 by welding or the like as described above, for example. One of the end portions of the winding core 21 may be supported on the inner wall face of the outer covering main body 30, instead.

### EXPLANATION OF REFERENCE NUMERALS

1...battery: lithium-ion secondary battery, 2...power generating element, 3...battery outer covering, 4... external terminal, 5...current collecting member, 20...electrode layered product, 21...winding core, 30...outer covering main body, 30a...bottom portion, 30b, 30c...side walls, 30d, 30e...front and back walls, 31...lid body, 32a, 32b...fitting recessed portions, 40...large-diameter portion, 50...connection portion, 51...coupling portion, 52a, 52b...pinching pieces, 210a, 210b...fitting protruding portions, 210c...plate portion, 211...core main body, 212...cover portion, 250...rivet, 251...connecting rod, 320...positioning portion, P1, P2...insulating packing, H1, H2, H3, H'...holes, B...sheet

## Claims

1. A battery comprising:
a winding-type power generating element (2) formed by winding a band-shaped electrode sheet (S1, S2) and a separator;
a battery outer covering (3) including a box-shaped outer covering main body (30), having an open portion, and a lid body, for closing the open portion, to house the power generating element (2);
an external terminal (4) disposed outside the battery outer covering (3); and
a current collecting member (5) disposed in the battery outer covering (3), fixed to the lid body, and electrically connected to the power generating element (2) and the external terminal (4),
wherein the current collecting member (5) includes a pair of pinching pieces (52a, 52b) for pinching end portion of the electrode sheet (S1, S2) and is electrically connected to the power generating element (2) by using the pair of pinching pieces (52a, 52b),
wherein the power generating element (2) includes a winding core (21) having rigidity at a winding center and at least one end of the winding core (21) is supported on an inner wall face of the outer covering main body (30).

2. The battery according to claim 1,
wherein the winding core (21) includes fitting protruding portions (210a, 210b) protruding outward from respective opposite ends of the electrode sheet (S1, S2) in a winding axis direction,
the outer covering main body (30) includes fitting recessed portions (32a, 32b) on two inner wall faces facing each other inside, and the fitting protruding portions (210a, 210b) at the opposite ends of the winding core are fitted into the fitting recessed portions (32a, 32b).

3. The battery according to claim 2, wherein the fitting recessed portions (32a, 32b) are formed in shapes of grooves extending from the open portion toward an inner side of the outer covering main body (30) and the fitting protruding portions (210a, 210b) are formed along the fitting recessed portions (32a, 32b).

4. The battery according to claim 3, wherein positioning portions for positioning the fitting protruding portions (210a, 210b) are formed at end portions of the fitting recessed portions (32a, 32b) on the inner side of the outer covering main body (30) and the power generating element (2) is disposed without contact with at least an inner bottom face of the outer covering main body (30).

5. The battery according to claim 4, wherein the fitting recessed portions (32a, 32b) extend from the open portion of the outer covering main body (30) to positions between the open portion and the inner bottom face.

6. The battery according to any one of claims 2 to 4, wherein the length of the winding core in the winding axis direction is such that outer faces of the fitting protruding portions (210a, 210b) press inner faces of the fitting recessed portions (32a, 32b).

7. The battery according to any one of claims 2 to 6, wherein the fitting protruding portions (210a, 210b) are in rectangular shapes when seen in a direction orthogonal to the winding axis.

8. The battery according to any one of claims 2 to 4, wherein each of the fitting protruding portions (210a, 210b) is tapered from a side of the electrode sheet (S1, S2) toward a tip end side and the fitting recessed portions (32a, 32b) are formed to correspond to shapes of the fitting protruding portions (210a, 210b).

9. The battery according to claim 8, wherein the fitting protruding portions (210a, 210b) are formed in triangular, semicircular, or trapezoidal shapes when seen in a direction orthogonal to the winding axis.

10. The battery according to any one of claims 2 to 9,
wherein the winding core includes a core main body having the fitting protruding portions (210a, 210b) at respective opposite end portions and a cover portion for covering a whole circumference of the core main body,
the fitting protruding portions (210a, 210b) are exposed from the cover portion,
the core main body is made of metal material having heat conductivity, and
the cover portion has an electrical insulation property and elasticity and is made of synthetic resin or natural resin.

11. The battery according to any one of claims 2 to 10, wherein the power generating element (2) is covered with a sheet having an electrical insulation property and has a resin film on an outer surface of the sheet.

12. The battery according to any one of claims 2 to 11, wherein the fitting recessed portions (32a, 32b) are formed at parts of the inner wall faces of the outer covering main body (30) and at least one of the fitting protruding portions (210a, 210b) provided to the winding core can protrude and recede in the winding axis direction.

13. The battery according to claim 12, wherein the winding core has, inside itself, a biasing means for biasing the fitting protruding portion (210a, 210b) outward.

14. The battery according to claim 1, wherein the winding core is fixed to the inner wall face of the outer covering main body (30) by welding.

## Patentansprüche

1. Batterie, umfassend:
ein Stromerzeugungselement (2) vom Wicklungstyp, das durch wickeln einer Bandförmigen Elektrodenlage (S1, S2) und einer Trennvorrichtung gebildet ist;
eine Batterieaußenabdeckung (3), einschließlich eines Box-förmigen Außenabdeckungshauptkörpers (30) mit einem offenen Teil und eines Abdeckkörpers zum Schließen des offenen Teils, um das Stromerzeugungselement (2) zu beherbergen,
einen externen Anschluss (4), der außerhalb der Batterieaußenabdeckung (3) angeordnet ist; und
ein Stromsammelelement (5), das in der Batterieaußenabdeckung (3) angeordnet ist, an dem Abdeckkörper befestigt ist und elektrisch mit dem Stromerzeugungselement (2) und dem externen Anschluss (4) verbunden ist,
wobei das Stromsammelelement (5) ein Paar von Klemmabschnitten (52a, 52b) zum Klemmen von Endteilen der Elektrodenlage (S1, S2) enthält und unter Verwendung des Paares von Klemmabschnitten (52a, 52b) elektrisch mit dem Stromerzeugungselement (2) verbunden ist,
wobei das Stromerzeugungselement (2) einen Wicklungskern (21) enthält, der in einer Mitte der Wicklung eine Festigkeit aufweist und wenigstens ein Ende des Wicklungskerns (21) an einer Innenwandfläche des Außenabdeckungshauptkörpers (30) gestützt wird.

2. Batterie gemäß Anspruch 1,
wobei der Wicklungskern (21) passende vorstehende Teile (210a, 210b) enthält, die sich von jeweils gegenüberliegenden Enden der Elektrodenlage (S1, S2) in eine Wicklungsachsrichtung nach außen erstrecken,
wobei der Außenabdeckungshauptkörper (30) passende vertiefte Teile (32a, 32b) an zwei Innenwandflächen, die innen einander zugewandt sind, enthält, wobei die passenden vorstehenden Teile (210a, 210b) an den gegenüberliegenden Enden des Wicklungskerns in die passenden vertieften Teile (32a, 32b) eingepasst sind.

3. Batterie gemäß Anspruch 2, wobei die passenden vertieften Teile (32a, 32b) in Formen von Nuten gebildet sind, die sich von dem offenen Teil in Richtung einer Innenseite des Außenabdeckungshauptkörpers (30) erstrecken und die passenden vorstehenden Teile (210a, 210b) entlang den passenden vertieften Teilen (32a, 32b) gebildet sind.

4. Batterie gemäß Anspruch 3, wobei Positionierungsteile zum Positionieren der passenden vorstehenden Teile (210a, 210b) an Endteilen der passenden vertieften Teile (32a, 32b) an der Innenseite des Außenabdeckungshauptkörpers (30) gebildet sind und das Stromerzeugungselement (2) ohne Kontakt mit wenigstens einer Innenbodenfläche des Außenabdeckungshauptkörpers (30) angeordnet ist.

5. Batterie gemäß Anspruch 4, wobei sich die passenden vertieften Teile (32a, 32b) von dem offenen Teil des Außenabdeckungshauptkörpers (30) zu Positionen zwischen dem offenen Teil und der Innenbodenfläche erstrecken.

6. Batterie gemäß irgendeinem der Ansprüche 2 bis 4, wobei die Länge des Wicklungskerns in der Wicklungsachsrichtung so ist, dass Außenflächen der passenden vorstehenden Teile (210a, 210b) gegen Innenflächen der passenden vertieften Teile (32a, 32b) drücken.

7. Batterie gemäß irgendeinem der Ansprüche 2 bis 6, wobei die passenden vorstehenden Teile (210a, 210b) rechteckige Formen aufweisen, wenn in einer Richtung senkrecht zu der Wicklungsachse betrachtet.

8. Batterie gemäß irgendeinem der Ansprüche 2 bis 4, wobei jeder der passenden vorstehenden Teile (210a, 210b) von einer Seite der Elektrodenlage (S1, S2) in Richtung einer Spitzenendseite verjüngt ist und wobei die passenden vertieften Teile (32a, 32b) entsprechend den Formen der passenden vorstehenden Teile (210a, 210b) gebildet sind.

9. Batterie gemäß Anspruch 8, wobei die passenden vorstehenden Teile (210a, 210b) in dreieckigen, halbrunden oder trapezförmigen Formen gebildet sind, wenn in einer Richtung senkrecht zu der Wicklungsachse betrachtet.

10. Batterie gemäß irgendeinem der Ansprüche 2 bis 9,
wobei der Wicklungskern enthält einen Kernhauptkörper, der die passenden vorstehenden Teile (210a, 210b) an jeweils gegenüberliegenden Endteilen aufweist, und einen Abdeckungsteil zum Abdecken eines gesamten Umfangs des Kernhauptkörpers,
wobei die passenden vorstehenden Teile (210a, 210b) von dem Abdeckungsteil freigelegt sind,
wobei der Kernhauptkörper aus einem Metallmaterial mit einer Wärmeleitfähigkeit hergestellt ist, und
wobei der Abdeckungsteil eine elektrische Isolationseigenschaft und Elastizität aufweist und aus einem Kunstharz oder einem natürlichen Harz hergestellt ist.

11. Batterie gemäß irgendeinem der Ansprüche 2 bis 10, wobei das Stromerzeugungselement (2) mit einer Lage bedeckt ist, die eine elektrische Isolationseigenschaft aufweist und einen Harzfilm an einer Außenoberfläche der Lage aufweist.

12. Batterie gemäß irgendeinem der Ansprüche 2 bis 11, wobei die passenden vertieften Teile (32a, 32b) an Bereichen der Innenwandflächen des Außenabdeckungshauptkörpers (30) gebildet sind und wobei wenigstens eines der passenden vorstehenden Teile (210a, 210b), die an dem Wicklungskern bereitgestellt sind, in die Wicklungsachsrichtung hervorstehen und zurücktreten können.

13. Batterie gemäß Anspruch 12, wobei der Wicklungskern innerhalb sich selbst ein Vorspannungsmittel aufweist zum Vorspannen der passenden vorstehenden Teile (210a, 210b) nach außen.

14. Batterie gemäß Anspruch 1, wobei der Wicklungskern an der Innenwandfläche des Außenabdeckungshauptkörpers (30) durch Schweißen befestigt ist.

## Revendications

1. Batterie comprenant :
un élément générateur d'énergie de type à enroulement (2) formé par l'enroulement d'une feuille d'electrode en forme de bande (S1, S2) et d'un séparateur ;
un revêtement extérieur de batterie (3) comprenant un corps principal recouvrant extérieur en forme de boîte (30), possédant une partie ouverte, un corps de couvercle, pour fermer la partie ouverte, permettant de loger l'élément générateur d'énergie (2) ;
un terminal externe (4) disposé à l'extérieur du revêtement extérieur de batterie (3) ; et
un élément collecteur courant (5) disposé dans le revêtement extérieur de batterie (3), fixé au corps de couvercle, et raccordé de manière électrique à l'élément générateur d'énergie (2) et au terminal externe (4),
dans lequel l'élément collecteur courant (5) inclut une paire d'éléments pinceurs (52a, 52b) pour pincer une partie d'extrémité de la feuille d'électrode (S1, S2) et est raccordé de manière électrique à l'élément générateur d'énergie (2) en utilisant la paire d'éléments pinceurs (52a, 52b),
dans lequel l'élément générateur d'énergie (2) inclut un noyau d'enroulement (21) possédant une rigidité au niveau d'un centre d'enroulement et au moins une extrémité du noyau d'enroulement (21) est supportée sur une face de la paroi interne du corps principal recouvrant externe (30).

2. Batterie selon la revendication 1,
dans laquelle le noyau d'enroulement (21) inclut des parties d'encastrement protubérantes (210a, 210b) faisant saillie vers l'extérieur à partir d'extrémités opposées respectives de la feuille d'électrode (S1, S2) dans une direction d'actes enroulement,
le corps principal recouvrant externe (30) inclut des parties en retrait d'ajustement (32a, 32b) sur deux faces de paroi interne se faisant face à l'intérieur, et les parties d'encastrement protubérantes (210a, 210b) aux extrémités opposées du noyau d'enroulement s'encastrent à l'intérieur des parties en retrait d'ajustement (32a, 32b).

3. Batterie selon la revendication 2, dans laquelle les parties en retrait d'ajustement (32a, 32b) sont formées en forme de rainures s'étendant depuis la partie ouverte en direction d'un côté interne du corps principal recouvrant externe (30) et les parties d'encastrement protubérantes (210a, 210b) sont formées le long des parties en retrait d'ajustement (32a, 32b).

4. Batterie selon la revendication 3, dans laquelle les parties de positionnement pour positionner les parties d'encastrement protubérantes (210a, 210b) sont formées au niveau des parties d'extrémité des parties en retrait d'ajustement (32a, 32b) sur le côté interne du corps principal recouvrant externe (30) et l'élément générateur d'énergie (2) est disposé sans contact avec au moins une face inférieure interne du corps principal recouvrant externe (30).

5. Batterie selon la revendication 4, dans laquelle les parties en retrait d'ajustement (32a, 32b) s'étendent depuis la partie ouverte du corps principal recouvrant externe (30) à des positions entre la partie ouverte et la face inférieure interne.

6. Batterie selon l'une quelconque des revendications 2 à 4, dans laquelle la longueur du noyau d'enroulement dans la direction d'axe d"enroulement est telle que les faces externes des parties d'encastrement protubérantes (210a, 210b) pressent contre les faces internes des parties en retrait d'ajustement (32a, 32b).

7. Batterie selon l'une quelconque des revendications 2 à 6, dans laquelle les parties d'encastrement protubérantes (210a, 210b) sont de forme rectangulaire une fois vues dans une direction orthogonale à l'axe d'enroulement.

8. Batterie selon l'une quelconque des revendications 2 à 4, dans laquelle chacune des parties d'encastrement protubérantes (210a, 210b) est conique depuis un côté de la feuille d'électrode (S1, S2) en direction d'un côté d'extrémité de pointe et les parties en retrait d'ajustement (32a, 32b) sont formées pour correspondre aux formes des parties d'encastrement protubérantes (210a, 210b).

9. Batterie selon la revendication 8, dans laquelle les parties d'encastrement protubérantes (210a, 210b) sont de forme triangulaire, semi-circulaire ou trapézoïdale une fois vues dans une direction orthogonale à l'axe d'enroulement.

10. Batterie selon l'une quelconque des revendications 2 à 94,
dans laquelle le noyau d'enroulement inclut une corps principal de noyau possédant les parties d'encastrement protubérantes (210a, 210b) à des parties d'extrémités opposées respectives et une partie de couverture pour recouvrir une circonférence entière du corps principal de noyau,
les parties d'encastrement protubérantes (210a, 210b) sont exposées à partir de la partie de couverture,
le corps principal de noyau est fabriqué à partir d'un matériau métallique possédant une conductivité thermique, et
la partie de couverture possède une propriété d'isolation électrique et une élasticité et est fabriquée à partir d'une résine synthétique ou d'une résine naturelle.

11. Batterie selon l'une quelconque des revendications 2 à 10, dans laquelle l'élément générateur d'énergie (2) est recouvert d'une feuille possédant une propriété d'isolation électrique et possède un film de résine sur une surface externe de la feuille.

12. Batterie selon l'une quelconque des revendications 2 à 11, dans laquelle les parties en retrait d'ajustement (32a, 32b) sont formées en partie des faces de la paroi interne du corps principal recouvrant externe (30) et au moins une des parties d'encastrement protubérantes (210a, 210b) provenant du noyau d'enroulement peut faire saillie et peut se retirer dans la direction de l'axe d'enroulement.

13. Batterie selon la revendication 12, dans laquelle le noyau d'enroulement possède, à l'intérieur de lui-même, un moyen de sollicitation pour solliciter la partie d'encastrement protubérante (210a, 210b) vers l'extérieur.

14. Batterie selon la revendication 1, dans laquelle le noyau d'enroulement est fixé à la face de la paroi interne du corps principal recouvrant externe (30) par soudure.
